(19) Europäisches Patentamt
European Patent Office
Office européen des brevets

(11) **EP 3 196 049 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(51) Int Cl.:
***B29B 7/74*** (2006.01) ***B60C 1/00*** (2006.01)
***C08K 3/04*** (2006.01)

(21) Anmeldenummer: **17150753.6**

(22) Anmeldetag: **10.01.2017**

(54) **KAUTSCHUKMISCHUNG FÜR DIE INNENSCHICHT ODER DEN SCHLAUCH VON FAHRZEUGLUFTREIFEN UND FAHRZEUGLUFTREIFEN**

RUBBER COMPOSITION FOR THE INNER LAYER OR THE HOSE OF PNEUMATIC VEHICLE TIRES AND PNEUMATIC VEHICLE TIRES

MÉLANGE DE CAOUTCHOUC POUR LA COUCHE INTÉRIEURE OU LA CHAMBRE DE PNEUMATIQUE DE VÉHICULE ET PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2016 DE 102016200950**

(43) Veröffentlichungstag der Anmeldung:
**26.07.2017 Patentblatt 2017/30**

(73) Patentinhaber: **Continental Reifen Deutschland GmbH**
**30165 Hannover (DE)**

(72) Erfinder:
• **Naik, Shreyas**
**30173 Hannover (DE)**
• **Efimov, Konstantin**
**30453 Hannover (DE)**
• **Jeromin, Dieter**
**30419 Hannover (DE)**
• **Müller, Matthias-Stephan**
**30827 Garbsen (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**US-A- 3 639 308 US-A1- 2010 249 353**
**US-A1- 2013 281 581**

**Beschreibung**

Die Erfindung betrifft eine Kautschukmischung für die Innenschicht oder den Schlauch von Fahrzeugluftreifen und einen Fahrzeugluftreifen.

Die Luftdichtigkeit von Fahrzeugluftreifen wird üblicherweise über eine Kautschukmischung enthaltend Butyl-Kautschuk und/oder Halobutyl-Kautschuk bestimmt.

Ferner ist es bekannt, derartigen Kautschukmischungen weitere Bestandteile, insbesondere Füllstoffe, zuzugeben, die die Luftdichtigkeit und/oder andere physikalische Eigenschaften im Zielkonflikt mit der Luftdichtigkeit weiter verbessern.

So offenbart die WO 2010034592 A1 eine Kautschukmischung für die Innenschicht von schlauchlosen Fahrzeugluftreifen, die u.a. Halobutyl-Kautschuk und als Füllstoff eine mineralische Verbindung, wie Talk oder Kaolin, enthält. Derartige Kautschukmischungen zeigen eine verbesserte Luftdichtigkeit und verbesserte Ermüdungseigenschaften.

Die US 2013/281581 A1 offenbart eine Kautschukmischung enthaltend einen Halobutyl-Kautschuk und Pyrolyse-Ruß.

Gleichzeitig trägt der Innerliner neben dem Laufstreifen und der Seitenwand auch zum Rollwiderstand des Fahrzeugluftreifens bei.

Der vorliegenden Erfindung liegt die Aufgabe zugrunde, eine Kautschukmischung für die Innenschicht oder den Schlauch eines Fahrzeugluftreifens bereitzustellen, die auf Basis des Standes der Technik eine weitere Verbesserung der Luftdichtigkeit und gleichzeitig verbesserte Rollwiderstandsindikatoren aufweist.

Gelöst wird diese Aufgabe erfindungsgemäß dadurch, dass die Kautschukmischung für die Innenschicht oder den Schlauch von Fahrzeugluftreifen folgende Bestandteile enthält:

- wenigstens einen Butyl-Kautschuk und/oder Halobutyl-Kautschuk und
- wenigstens einen Pyrolyse-Ruß und
- wenigstens einen plättchenförmigen Füllstoff.

Überraschenderweise wurde gefunden, dass die erfindungsgemäße Kautschukmischung im Vergleich zum Stand der Technik durch die Kombination der genannten Bestanteile eine weitere Verbesserung der Luftdichtigkeit und zudem verbesserte Rollwiderstandsindikatoren aufweist.

Unter Fahrzeugluftreifen werden im Rahmen der vorliegenden Erfindung sowohl schlauchlose Fahrzeugluftreifen mit einer Innenschicht (oder auch Innenseele oder Innerliner genannt) als auch Fahrzeugluftreifen mit einem Schlauch verstanden.

Hierbei sind alle dem Fachmann bekannten Fahrzeugluftreifen umfasst, wie insbesondere PKW-Reifen, LKW-Reifen, Zweiradreifen.

Fahrzeugluftreifen, die mit einem Schlauch versehen sind, werden im Rahmen der vorliegenden Erfindung auch als Schlauchreifen bezeichnet.

Eine weitere Aufgabe der vorliegenden Erfindung besteht darin, einen Fahrzeugluftreifen bereitzustellen, der eine gegenüber dem Stand der Technik weiter verbesserte Luftdichtigkeit und einen verbesserten Rollwiderstand aufweist.

Gelöst wird diese Aufgabe erfindungsgemäß dadurch, dass der Fahrzeugluftreifen wenigstens eine Kautschukmischung aufweist, die die folgenden Bestandteile enthält:

- wenigstens einen Butyl-Kautschuk und/oder Halobutyl-Kautschuk und
- wenigstens einen Pyrolyse-Ruß und
- wenigstens einen plättchenförmigen Füllstoff.

Der erfindungsgemäße Fahrzeugluftreifen zeigt im Vergleich zum Stand der Technik überraschenderweise ein verbesserte Luftdichtigkeit und einen verbesserten

Rollwiderstand, wenn er die oben beschriebene erfindungsgemäße Kautschukmischung in wenigstens einem Bauteil, insbesondere wenigstens einem inneren Bauteil, aufweist. Bevorzugt weist der Fahrzeugluftreifen die Kautschukmischung im Fall eines schlauchlosen Reifens in der Innenschicht oder im Fall eines Schlauchreifens im Schlauch auf.

Gemäß einer bevorzugten Ausführungsform der Erfindung handelt es sich um einen schlauchlosen Fahrzeugluftreifen, der wenigstens eine erfindungsgemäße Kautschukmischung wenigstens in der Innenschicht aufweist.

Gemäß einer weiteren bevorzugten Ausführungsform der Erfindung handelt es sich um einen Schlauchreifen, der wenigstens eine erfindungsgemäße Kautschukmischung wenigstens im Schlauch aufweist.

Gegenstand der vorliegenden Erfindung ist ebenfalls ein Schlauch zur Verwendung in einem Schlauchreifen, der wenigstens eine erfindungsgemäße Kautschukmischung inklusive bevorzugter Ausführungsformen enthält.

Weitere Anwendung findet die erfindungsgemäße Kautschukmischung in der Mischungsentwicklung für Riemen, Gurte, insbesondere für Fördergurte, und sonstige Schläuche.

Im Folgenden werden die Bestandteile der erfindungsgemäßen Kautschukmischung näher ausgeführt. Sämtliche Ausführungen gelten auch für den erfindungsgemäßen Fahrzeugluftreifen, der die erfindungsgemäße Kautschukmischung bevorzugt in wenigstens einem inneren Bauteil, besonders bevorzugt in der Innenschicht oder im Schlauch, aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die erfindungsgemäße Kautschukmischung enthält wenigstens einen Butyl-Kautschuk und/oder Halobutyl-Kautschuk. Hierbei kann es sich um alle dem Fachmann bekannten Typen handeln. Der Halobutyl-Kautschuk ist bevorzugt ein Chlorobutyl-Kautschuk und/oder ein Bromobutyl-Kautschuk. Es ist auch ein Gemisch aus einem oder mehreren Butyl-Kautschuken mit einem oder mehreren Halobutyl-Kautschuken denkbar.

Die Gesamtmenge an Butyl-Kautschuk und/oder Halobutyl-Kautschuk beträgt bevorzugt 20 bis 100 phr, besonders bevorzugt 50 bis 100 phr, ganz besonders bevorzugt 70 bis 100 phr.

Für den Fall, dass die Kautschukmischung weniger als 100 phr, also beispielsweise 70 bis 99,9 phr Butyl-Kautschuk und/oder Halobutyl-Kautschuk enthält, ist wenigstens ein weiterer Kautschuk in der Kautschukmischung enthalten, sodass die Gesamtmenge an enthaltenen Kautschuken 100 phr beträgt.

Der weitere Kautschuk ist bevorzugt ein Dienkautschuk, der ausgewählt ist aus der Gruppe bestehend aus synthetischem Polyisopren (IR) und/oder natürlichem Polyisopren (NR) und/oder epoxidiertem Naturkautschuk (ENR) und/oder Styrol-Butadien-Copolymer und/oder Butadien-Kautschuk (BR) und/oder Styrol-Isopren-Copolymer und/oder Styrol-Isopren-Butadien-Terpolymer und/oder Ethylen-Propylen-Dienkautschuk, wobei der weitere Dienkautschuk modifiziert sein kann.

Bei der Modifizierung kann es sich um solche mit Hydroxy-Gruppen und/oder EthoxyGruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Insbesondere Styrol-Isopren-Butadien-Terpolymer oder Ethylen-Propylen-Dien-Kautschuk kommen bei der Herstellung von technischen Gummiartikeln, wie Gurte, Riemen und Schläuche, zum Einsatz.

Besonders bevorzugt ist der wenigstens eine weitere Kautschuk ausgewählt aus der Gruppe bestehend aus synthetischem Polyisopren (IR) und/oder natürlichem Polyisopren (NR) und/oder epoxidiertem Naturkautschuk (ENR) und/oder Styrol-Butadien-Copolymer und/oder Butadien-Kautschuk (BR).

Die erfindungsgemäße Kautschukmischung enthält wenigstens einen Pyrolyse-Ruß, der bevorzugt mittels Pyrolyse aus Altreifen und/oder vulkanisierten Produktionsabfällen aus der Reifenherstellung und/oder vulkanisierten Schläuchen hergestellt wurde.

Besonders bevorzugt wurde der Pyrolyseruß aus Altreifen und/oder Schläuchen hergestellt, ganz besonders bevorzugt aus Altreifen.

Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.

Im Rahmen der vorliegenden Erfindung handelt es sich bei den organischen Materialien bevorzugt um Altreifen und/oder vulkanisierten Produktionsabfällen aus der Reifenherstellung und/oder vulkanisierten Schläuchen, d.h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.

Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden, wobei die aufgeführten Ausführungsformen bevorzugt sind.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon © 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Überraschenderweise wird in der erfindungsgemäßen Kautschukmischung in Kombination mit Butyl-Kautschuk und/oder Halobutyl-Kautschuk durch Pyrolyse-Ruß eine Verbesserung der Luftdichtigkeit und der Rollwiderstandsindikatoren erzielt. Bevorzugt wird hierbei ein Teil oder die gesamte Menge des im Stand der Technik bekannten in der Kautschukmischung für die Innenschicht enthaltenen Rußes, wie zum Beispiel N660, durch Pyrolyse-Ruß ausgetauscht.

Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Der erfindungsgemäß enthaltene Pyrolyse-Ruß weist bevorzugt einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.

Der Aschegehalt bezieht sich nur auf den Pyrolyse-Ruß und wird mittels thermogravimetrischer Analyse (TGA) gemäß ASTM D1506 des Pyrolyse-Rußes bestimmt.

Mit einem derartigen Aschegehalt wird eine besonders gute Luftdichtigkeit der erfindungsgemäßen Kautschukmischung bzw. des erfindungsgemäßen Fahrzeugluftreifens erzielt.

Der erfindungsgemäß enthaltene Pyrolyse-Ruß weist ferner bevorzugt einen SchwefelGehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.

Mit einem derartigen Schwefelgehalt wird eine besonders gute Luftdichtigkeit der erfindungsgemäßen Kautschukmischung bzw. des erfindungsgemäßen Fahrzeugluftreifens erzielt.

Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf.

Die erfindungsgemäße Kautschukmischung kann wie oben beschrieben zusätzlich zu dem enthaltenen Pyrolyse-Ruß wenigstens einen oder mehrere Industrieruße enthalten. Bevorzugte und bekannte Ruße, insbesondere für die Innenschicht von Fahrzeugluftreifen, sind insbesondere N660 und N550.

mit einer DBP-Zahl gemäß ASTM D 2414 von 60 bis 130 ml/100 g, bevorzugt 75 bis 95 ml/100 g.

Die DBP-Zahl gemäß ASTM D 2414 bestimmt das spezifische Absorptionsvolumen eines Rußes mittels Dibutylphthalat. Ein geeigneter Ruß ist beispielsweise der Ruß N 660 mit einer Jodadsorptionszahl gemäß ASTM D 1510 von 36 g/kg und einer DBP-Zahl gemäß ASTM D 2414 von 90 ml/100g.

Die Menge des enthaltenen Pyrolyse-Rußes beträgt bevorzugt 3 bis 80 phr, besonders bevorzugt 3 bis 50 phr. Gemäß einer besonders vorteilhaften Ausfiihrungsform der Erfindung enthält die Kautschukmischung 25 bis 60 phr, bevorzugt 25 bis 50 phr, ganz besonders bevorzugt 40 bis 50 phr, wenigstens eines Pyrolyse-Rußes. Hiermit werden eine besonders gute Luftdichtigkeit und besonders gute Rollwiderstandsindikatoren erzielt.

Die Menge an zusätzlich enthaltenem Ruß (Industrieruß) beträgt 0 bis 77 phr, bevorzugt 0 bis 47 phr, besonders bevorzugt 5 bis 35 phr.

Gemäß einer besonders vorteilhaften Ausführungsform der Erfindung enthält die Kautschukmischung 0 phr eines zusätzlichen Rußes. Hiermit werden eine besonders gute Luftdichtigkeit und verbesserte Rollwiderstandsindikatoren erzielt.

Gemäß einer weiteren vorteilhaften Ausführungsform der Erfindung enthält die Kautschukmischung 5 bis 30 phr eines zusätzlichen Rußes.

Die erfindungsgemäße Kautschukmischung enthält für eine sehr gute Luftdichtigkeit der Kautschukmischung, insbesondere für die Innenschicht von Fahrzeugreifen, wie im Stand der Technik bekannt, wenigstens einen plättchenförmigen Füllstoff, wie Schichtsilikate und/oder Trockengemisch-Verbindungen, die wenigstens 25 Gew.-% zumindest einer delaminierten Alumohydrosilikat-Modifikation enthält, wobei die delaminierte Alumohydrosilikat-Modifikation ein Zweischichtgitter aufweist. Derartige Füllstoffe sind in der WO 2010034592 A1 beschrieben.

Der plättchenförmige Füllstoff lässt sich durch die Form der Partikel beschreiben, wobei der so genannte aspect ratio bestimmt wird.

Es hat sich als vorteilhaft erwiesen, wenn der aspect ratio, d.h. das Verhältnis Länge zu Breite der Partikel (L / B), zwischen 1,0 bis 2,8, bevorzugt zwischen 1,0 bis 2,0 und besonders bevorzugt zwischen 1,2 bis 1,5, beträgt. Zur Ermittlung des aspect ratios wurden die Partikel mit Hilfe eines automatischen Bildanalyseverfahrens mit CCD-Detektor, Sysmex FPIA-3000 der Firma Malvern Instruments Ltd., vermessen. Für weitere Details bezüglich der Messanalytik sei an dieser Stelle auf die entsprechenden Datenblätter und Informationen des genannten Herstellers verwiesen, welche zum Teil auch auf dessen Homepage verfügbar sind.

Weiterhin beträgt der Schichtindex (lamellarity index) der delaminierten Alumohydrosilikat-Modifikation 2 bis 15, bevorzugt 2 bis 10, besonders bevorzugt 2 bis 5. Der Schichtindex ist ein Maß für die Morphologie, d. h. für den Grad der Delaminierung (Entblätterung der Schichten); bei gleicher Feinheit der delaminierten Alumohydrosilikat-Modifikation (bestimmt durch Laserbeugung) zeigt ein höherer Schichtindex eine höhere Struktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet. Bevorzugt handelt es sich bei dem Schichtsilikat um Talk. Talk ist ein Magnesiumsilikat mit der Formel $Mg_3[(OH)_2/Si_4O_{10}]$, wie es beispielsweise dem Römpp-Online-Lexikon, © 2016 Georg Thieme Verlag KG (Stand 08.01.2016) zu entnehmen ist. Talk ist ein Dreischicht-Phyllosilikat.

Die Trockengemisch-Verbindung hat bevorzugt einen Wassergehalt von 0 bis 2%, bevorzugt von 0 bis 1%. Dieser Wassergehalt ist im Wesentlichen, aber nicht ausschließlich, auf das Vorhandensein von Kristallwasser zurückzuführen.

Das Zweischichtgitter der delaminierten Alumohydrosilikat-Modifikation ist bevorzugt ein dioktaedrisches Zweischichtgitter.

Bevorzugt ist es, wenn es sich bei der delaminierten Alumohydrosilikat-Modifikation um delaminiertes $Al_2[(OH)_4/Si_2O_5]$ handelt, was auch unter dem Namen Kaolinit bekannt ist. Bei der Trockengemisch-Verbindung kann es sich somit um ein Kaolin handeln.

In einer besonders bevorzugten Ausführungsform enthält die Trockengemisch-Verbindung zusätzlich wenigstens 40% eines di- oder trioktaedrischen Dreischichtsilikates aus der Gruppe der Phyllosilikate und/oder wenigstens 10% einer kristallinen Quarzmodifikation oder amorphen Quarz. Die Prozentangabe bezieht sich dabei auf das Gesamtgewicht der Trockengemisch-Verbindung.

Bezüglich der Klassifizierung der di-oder trioktaedrischen Dreischichtsilikate sei beispielhaft auf Matthes, Mineralogie, Springer-Lehrbuch, 3. Auflage, 1990, S. 129 ff, verwiesen.

Besonders bevorzugt ist der plättchenförmige Füllstoff ausgewählt aus der Gruppe bestehend aus Talk und Kaolin, wobei auch ein Gemisch aus mehreren der genannten Füllstoffe denkbar ist. Hierdurch wird ein gutes Niveau der Luftdichtigkeit der erfindungsgemäßen Kautschukmischung erzielt.

Die Menge des plättchenförmigen Füllstoffs beträgt bevorzugt 5 bis 100 phr, bevorzugt 5 bis 60 phr und gemäß einer bevorzugten Ausführungsform 35 bis 60 phr, besonders bevorzugt 35 bis 50 phr, ganz besonders bevorzugt 35 bis 45 phr. Bei einem Gemisch aus zwei oder mehreren der genannten plättchenförmigen Füllstoffe beziehen sich die Mengenangaben auf die Gesamtmenge der plättchenförnigen Füllstoffe, wie insbesondere Talk und/oder Kaolin. Mit derartigen Mengen der genannten weiteren Füllstoffe werden sehr gute Luftdichtigkeiten bei sehr guten sonstigen Eigenschaften der Kautschukmischung erzielt.

Es ist ferner denkbar, dass die Kautschukmischung wenigstens eine Kieselsäure enthält. Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 $m^2$/g, bevorzugt von 35 bis 260 $m^2$/g, besonders bevorzugt von 100 bis 260 $m^2$/g und ganz besonders bevorzugt von 130 bis 235 $m^2$/g, und eine CTAB-Oberfläche (gemäß ASTM D 3765) von 30 bis 400 $m^2$/g, bevorzugt von 30 bis 250 $m^2$/g, besonders bevorzugt von 100 bis 250 $m^2$/g und ganz besonders bevorzugt von 110 bis 230 $m^2$/g, aufweist. Derartige Kieselsäuren führen zu Vorteilen in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die erfindungsgemäße Kautschukmischung kann bevorzugt möglichst geringe Mengen d.h. bevorzugt 0 bis 10 phr, besonders bevorzugt 0 bis 2 phr, weitere Füllstoffe enthalten. Zu den weiteren (nicht verstärkenden) Füllstoffen zählen im Rahmen der vorliegenden Erfindung, Calciumcarbonat, Stärke, Magnesiumoxid, Titandioxid oder Kautschukgele sowie Fasern (wie zum Beispiel Aramidfasern, Glasfasern, Carbonfasern, Cellulosefasern). Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Falls in der Kautschukmischung zumindest eine Kieselsäure enthalten ist, ist zudem bevorzugt wenigstens ein Kupplungsagens, in Form von Silan oder einer siliziumorganischen Verbindung, enthalten. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Es können in der Kautschukmischung noch 0 bis 100 phr, bevorzugt 0,1 bis 70 phr, bevorzugt 0,1 bis 30 phr, zumindest eines Weichmachers vorhanden sein. Hierzu gehören alle dem Fachmann bekannten Weichmacher wie aromatische, naphthenische oder paraffinische Mineralölweichmacher, z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),

b) Aktivatoren, wie z. B. Zinkoxid und Fettsäuren (z. B. Stearinsäure),

c) Wachse,

d) Harze, insbesondere Klebharze, die keine Weichmacherharze sind,

e) Mastikationshilfsmittel, wie z. B. 2,2'-Dibenzamidodiphenyldisulfid (DBD und

f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 $m^2$/g auf. Es kann aber auch ein Zinkoxid mit einer BET-Oberfläche von 10 bis 100 $m^2$/g, wie z.B. so genannte "nano-Zinkoxide", verwendet werden.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können und Schwefel und/oder Schwefelspender sowie Vulkanisationsbeschleuniger in den im Stand der Technik bekannten Mengen eingesetzt werden.

Schwefel und/oder Schwefelspender sowie ein oder mehrere Beschleuniger werden im letzten Mischungsschritt in den genannten Mengen der Kautschukmischung zugesetzt.

Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder 2,2'-Dibenzothiazyldisulfid (MBTS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel (1):

$$(1) \qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).

Außerdem können in der Kautschukmischung Vulkanisationsverzögerer vorhanden sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt, wobei Substanzen, die auch eine vulkanisationsverzögernde Wirkung haben, wie MBTS, auch in einer der Grundmischstufen zugegeben werden können. Die Fertigmischung wird z.B. durch einen Extrusions- oder Kalandriervorgang weiterverarbeitet und in die entsprechende Form gebracht. Dem Fachmann sind allgemein Verfahren zur Herstellung von Fahrzeugreifen, insbesondere der Innenschicht von schlauchlosen Reifen und Schläuchen von Schlauchreifen, bekannt.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Die unter V1 angegebenen Werte sind somit Werte einer Vergleichsmischung aus dem Stand der Technik.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:

- Shore-A-Härte bei Raumtemperatur (RT) gemäß DIN ISO 7619-1
- Rückprallelastizität bei Raumtemperatur und 70 °C gemäß DIN 53 512
- Zugfestigkeit, Bruchdehnung und Spannungswert bei 300% (Modul 300) statischer Dehnung bei Raumtemperatur gemäß DIN 53 504
- Luftpermeabilität gemäß DIN 53 536 bei 70 °C Lufttemperatur
- Maximaler (max) Verlustfaktor $\tan \delta$ (tangens delta) aus dynamisch-mechanischer Messung bei 55 °C gemäß DIN 53 513, Dehnungsdurchlauf (engl. "strain sweep")

Verwendete Substanzen

Tabelle 1

| Bestandteile | Einheit | V1 | E1 | E2 | E3 |
|---|---|---|---|---|---|
| Halobutyl-Kautschuk [a] | phr | 100 | 100 | 100 | 100 |
| Kaolin [b] | phr | 40 | 40 | 40 | 40 |
| Ruß [c] | phr | 45 | 30 | 15 | - |
| Pyrolyse-Ruß [d] | phr | - | 15 | 30 | 45 |
| Sonst. Zusatzstoffe [e] | phr | 25 | 25 | 25 | 25 |
| **Eigenschaften** | | | | | |
| Gaspermeabilität | $10E-17*m^2/(Pa*sec)$ | 4,1 | 4,0 | 3,5 | 3,2 |
| Zugfestigkeit | MPa | 6,1 | 6,5 | 6,0 | 5,8 |
| Bruchdehnung | % | 905 | 875 | 753 | 710 |
| Modul 300 | MPa | 2,3 | 2,5 | 2,8 | 2,8 |
| Shore Härte b. RT | Shore A | 51 | 49 | 49 | 48 |
| Rückprallelastizität RT | % | 8,5 | 8,5 | 8,4 | 8,4 |
| Rückprallelastizität b. 70 °C | % | 32,9 | 34,9 | 37,3 | 37,2 |
| Tan. Delta max. | | 0,26 | 0,247 | 0,237 | 0,23 |

[a] Exxon Chlorobutyl 1066, Fa. ExxonMobile
[b] Kaolin: Kaolin W, Fa. Erbsloeh Lohrheim GmbH
[c] Ruß: DBP-Zahl = 75 bis 95 ml/100 g ; Aschegehalt = max. 1 Gew.%
[d] Pyrolyse-Ruß: DBP-Zahl = 90 ml/100 g, Jodzahl = 115 g/kg, Aschegehalt = 18,4 Gew.-%, Schwefelgehalt = 2,4 Gew.-%.
[e] Sonstige Zusatzstoffe: Weichmacher, Klebharz, Zinkoxid, Stearinsäure, Schwefel, Beschleuniger MBTS.

Wie Tabelle 1 zu entnehmen ist, zeigen die erfindungsgemäßen Kautschukmischungen E1 bis E3 im Vergleich zu V1 bei Austausch eines Teiles oder der gesamten Menge an herkömmlichem Ruß (Industrieruß) überraschenderweise verbesserte Rückprallelastizitäten bei 70 °C und somit verbesserte Rollwiderstandsindikatoren. Gleichzeitig zeigen die Kautschukmischungen E1 und E2 und E3 eine geringere Gaspermeabilität, wodurch sie eine verbesserte Luftdichtigkeit aufweisen.

Zudem bleiben die sonstigen Eigenschaften, wie insbesondere Zugfestigkeit und die Steifigkeiten, auf einem vergleichbaren Niveau.

Ein Fahrzeugluftreifen, der die erfindungsgemäß Kautschukmischung in der Innenschicht oder im Schlauch enthält, zeigt somit eine weiter verbesserte Luftdichtigkeit und einen optimierten Rollwiderstand.

**Patentansprüche**

1. Kautschukmischung für die Innenschicht oder den Schlauch von Fahrzeugluftreifen, die folgende Bestandteile enthält:

    - wenigstens einen Butyl-Kautschuk und/oder Halobutyl-Kautschuk und
    - wenigstens einen Pyrolyse-Ruß, und
    - wenigstens einen plättchenförmigen Füllstoff.

2. Kautschukmischung nach Anspruch 1, **dadurch gekennzeichnet, dass** der Pyrolyse-Ruß einen Aschegehalt gemäß ASTM D1506 von 5 bis 30 Gew.-% aufweist.

3. Kautschukmischung nach Anspruch 1 oder 2, **dadurch gekennzeichnet, dass** der Pyrolyse-Ruß einen Schwefelgehalt gemäß ASTM D4239 von größer als 1 Gew.-% aufweist.

**4.** Kautschukmischung nach einem der vorherigen Ansprüche, **dadurch gekennzeichnet, dass** die Menge des enthaltenen Pyrolyse-Rußes 3 bis 80 phr beträgt.

**5.** Kautschukmischung nach Anspruch 4, **dadurch gekennzeichnet, dass** die Menge des enthaltenen Pyrolyse-Rußes 25 bis 60 phr beträgt.

**6.** Kautschukmischung nach einem der vorherigen Ansprüche, **dadurch gekennzeichnet, dass** sie 20 bis 100 phr wenigstens eines Butyl-Kautschuk und/oder Halobutyl-Kautschuks enthält.

**7.** Fahrzeugluftreifen, der wenigstens eine Kautschukmischung nach einem der Ansprüche 1 bis 6 aufweist.

**8.** Fahrzeugluftreifen nach Anspruch 7, wobei es sich um einen schlauchlosen Fahrzeugluftreifen handelt und er die Kautschukmischung wenigstens in der Innenschicht aufweist.

**9.** Fahrzeugluftreifen nach Anspruch 7, wobei es sich um einen Schlauchreifen handelt und er die Kautschukmischung wenigstens Schlauch aufweist.

**10.** Schlauch zur Verwendung in einem Schlauchreifen, wobei er wenigstens eine Kautschukmischung nach einem der Ansprüche 1 bis 6 enthält.


**Claims**

**1.** Rubber mixture for the innerlayer or the tube of pneumatic vehicle tyres which contains the following constituents:

- at least one butyl rubber and/or halobutyl rubber and
- at least one pyrolysis carbon black and
- at least one platelet-shaped filler.

**2.** Rubber mixture according to Claim 1, **characterized in that** the pyrolysis carbon black has an ash content according to ASTM D1506 of 5% to 30% by weight.

**3.** Rubber mixture according to Claim 1 or 2, **characterized in that** the pyrolysis carbon black has a sulfur content according to ASTM D4239 of more than 1% by weight.

**4.** Rubber mixture according to any of the preceding claims, **characterized in that** the amount of the pyrolysis carbon black present is 3 to 80 phr.

**5.** Rubber mixture according to Claim 4, **characterized in that** the amount of the pyrolysis carbon black present is 25 to 60 phr.

**6.** Rubber mixture according to any of the preceding claims, **characterized in that** it contains 20 to 100 phr of at least one butyl rubber and/or halobutyl rubber.

**7.** Pneumatic vehicle tyre comprising at least one rubber mixture according to any of Claims 1 to 6.

**8.** Pneumatic vehicle tyre according to Claim 7, wherein said tyre is a tubeless pneumatic vehicle tyre and it comprises the rubber mixture at least in the innerlayer.

**9.** Pneumatic vehicle tyre according to Claim 7, wherein said tyre is a tubed tyre and it comprises the rubber mixture at least in the tube.

**10.** Tube for use in a tubed tyre, wherein said tube contains at least one rubber mixture according to any of Claims 1 to 6.


**Revendications**

**1.** Mélange de caoutchouc pour la couche intérieure ou la chambre à air de pneus de véhicules, contenant les constituants suivants :

- au moins un caoutchouc de butyle et/ou un caoutchouc d'halobutyle, et
- au moins un noir de carbone de pyrolyse et
- au moins une charge sous la forme de plaquettes.

2. Mélange de caoutchouc selon la revendication 1, **caractérisé en ce que** le noir de carbone de pyrolyse présente une teneur en cendres selon ASTM D1506 de 5 à 30 % en poids

3. Mélange de caoutchouc selon la revendication 1 ou 2, **caractérisé en ce que** le noir de carbone de pyrolyse présente une teneur en soufre selon ASTM D4239 de plus de 1 % en poids.

4. Mélange de caoutchouc selon l'une quelconque des revendications précédentes, **caractérisé en ce que** la quantité de noir de carbone de pyrolyse contenu est de 3 à 80 pce.

5. Mélange de caoutchouc selon la revendication 4, **caractérisé en ce que** la quantité de noir de carbone de pyrolyse contenu est de 25 à 60 pce.

6. Mélange de caoutchouc selon l'une quelconque des revendications précédentes, **caractérisé en ce qu'**il contient 20 à 100 pce d'au moins un caoutchouc de butyle et/ou un caoutchouc d'halobutyle.

7. Pneu de véhicule, qui comprend au moins un mélange de caoutchouc selon l'une quelconque des revendications 1 à 6.

8. Pneu de véhicule selon la revendication 7, qui consiste en un pneu de véhicule sans chambre à air et qui comprend le mélange de caoutchouc au moins dans la couche intérieure.

9. Pneu de véhicule selon la revendication 7, qui consiste en un pneu à chambre à air et qui comprend le mélange de caoutchouc au moins dans la chambre à air.

10. Chambre à air destinée à une utilisation dans un pneu à chambre à air, qui contient au moins un mélange de caoutchouc selon l'une quelconque des revendications 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010034592 A1
- US 2013281581 A1
- EP 2589619 A1
- WO 2010049216 A2

**In der Beschreibung aufgeführte Nicht-Patentliteratur**

- *Rubber Chemistry and Technology,* 2012, vol. 85 (3), 408-449
- Römpp-Online-Lexikon ©. Georg Thieme Verlag KG, 2016
- Römpp-Online-Lexikon, ©. Georg Thieme Verlag KG, 2016
- **MATTHES.** Mineralogie. Springer-Lehrbuch, 1990, 129 ff